# EUROPÄISCHE PATENTANMELDUNG

(11) **EP 4 847 713 A1**
(43) Veröffentlichungstag der Anmeldung: **02.12.2026**
(21) Anmeldenummer: 25179422.8
(22) Anmeldetag: 28.05.2025
(51) Int. Cl.: E04D 5/02, B32B 27/12, E04D 5/08, E04D 5/10, E04D 5/12, E04D 5/14, E04D 15/04

(54) **BITUMEN-OBERBAHN ZUM FLAMMENLOSEN FLÄCHENVERSCHWEISSEN**

(71) Anmelder: swisspor Management AG, 6312 Steinhausen (CH)
(72) Erfinder: Eberhardt, Raoul, 3942 Niedergesteln (CH); Roten, Olivier, 3942 Raron (CH); Tholl, Norbert, 6032 Emmen (CH)
(74) Vertreter: Stolmár & Partner Intellectual Property GmbH

(57) **Zusammenfassung**

Die vorliegende Erfindung beansprucht eine Bitumen-Oberbahn (1) zum flammenlosen Flächenverschweissen auf einen bituminösen Untergrund (2) mittels flammenloser Wärmequelle, wobei die Bitumen-Oberbahn (1) eine untere (1a) und eine obere (1b) Bitumenschicht umfasst, wobei zwischen der unteren (1a) und oberen (1b) Bitumenschicht mindestens ein Vlies (3) angeordnet ist, wobei die untere Bitumenschicht (1a) der Bitumen-Oberbahn (1) i) Bitumen, ii) mindestens ein von Bitumen unterschiedliches organisches Polymer, iii) mindestens ein Füllstoff, iv) mindestens ein Harz, und v) optional mindestens eine weitere Komponente umfasst, wobei die Summe der Komponenten i) bis v) 100 Gew.-% ergibt, und die Zusammensetzung der oberen (1b) und unteren (1a) Bitumenschicht gleich oder verschieden ist. Beansprucht wird auch eine flammenlos verschweisste, mindestens 2-lagige Bitumenbeschichtung (5) umfassend die erfindungsgemässe Bitumen-Oberbahn (1), ein Verfahren zum flammenlosen Flächenverschweissen der Bitumen-Oberbahn (1), sowie die Verwendung der Bitumen-Oberbahn (1).

## Beschreibung

Die vorliegende Erfindung bezieht sich auf eine Bitumen-Oberbahn zum flammenlosen Flächenverschweissen auf einen bituminösen Untergrund mittels flammenloser Wärmequelle, eine flammenlos verschweisste, mindestens 2-lagige Bitumenbeschichtung umfassend die Bitumen-Oberbahn, ein Verfahren zum flammenlosen Flächenverschweissen der Bitumen-Oberbahn, sowie die Verwendung der Bitumen-Oberbahn.

Bauwerksflächen, beispielsweise Gebäudeflächen wie Flachdächer von Gebäuden, Überdachungen und Brücken von Strassen und Eisenbahn, sowie Schwimmbäder, müssen gegen eindringendes Oberflächenwasser geschützt werden, um möglichen Bauschäden vorzubeugen. Als ein geeigneter Schutz haben sich Bitumenkomposite, insbesondere in Form von Bitumenbahnen, erwiesen. Diese können kosteneffizient hergestellt und auf abzudichtende Bauwerksflächen verlegt werden.

Für einen optimalen Schutz der Bauwerks- und Dachflächen wird üblicherweise ein Warmdachaufbau gewählt. Hierzu wird zunächst eine Wärmedämmung, beispielsweise aus Polymerschaum, verlegt. Darauf wird dann lose eine bituminöse Unterlage, in der Regel in Form von Bitumen-Unterbahnen, verlegt, welche im Stossbereich - typischerweise mittels Bitumenbrenner - miteinander verschweisst werden. Auf diese Bitumen-Unterbahnen werden nachfolgend Bitumen-Oberbahnen mittels offener Flamme flächig verschweisst.

Nachteilig an diesem Verfahren ist, dass bei unsachgemässer Handhabung der Polymerschaum, der Untergrund und/oder herumliegendes Verpackungsmaterial durch die Flamme angesengt werden oder sogar Feuer fangen kann. Aufgrund dessen kann im schlimmsten Fall der Dachstock oder sogar das ganze Bauwerk in Brand geraten.

Eine Alternative zum flächigen Verschweissen der Bitumen-Oberbahn mit der Bitumen-Unterbahn mittels offener Flamme ist die Kaltverlegung der Bitumen-Oberbahn auf die Bitumen-Unterbahn. Hierzu wird die Bitumen-Unterbahn mit einer selbstklebenden Oberseite und die Bitumen-Oberbahn mit einer selbstklebenden Unterseite ausgestattet. Diese sogenannten Selbstklebebitumenbahnen sind für den Transport und die Lagerung mit einer Schutzfolie bedeckt, welche beim Verlegen abgezogen werden, wodurch die beiden Bahnen fest miteinander verklebt werden.

Allerdings ist die vollflächige, d.h. blasenfreie, Verklebung einer Bitumen-Oberbahn mit selbstklebender Unterseite mit der selbstklebenden Oberseite der Bitumen-Unterbahn äusserst anspruchsvoll, wenn in der Praxis nicht sogar unmöglich. Hinzu kommt, dass die Selbstklebebitumenbahnen im erweiterten Bitumen-Typisierungs-Schnell-Verfahren (BTSV; in Anlehnung an die EN 17643) eine Wärmestandfestigkeit bei 1kPa von lediglich 85 - 100 °C aufweisen, während beispielsweise gemäss Schweizer Norm eine solche von mindestens 100 °C gefordert wird.

Die WO-A-2023/006518 offenbart eine mobile Schweissvorrichtung zur flächigen Verbindung einer Abdichtungsbahn mit einer Unterlage und/oder einem Untergrund, umfassend zumindest eine auf der Unterlage und/oder dem Untergrund verfahrbare Tragrahmenanordnung und eine sich zwischen zwei gegenüberliegenden Längsseiten der Tragrahmenanordnung in einer Querrichtung erstreckende elektrischen Heizkeilheizeinrichtung, wobei die elektrische Heizkeilheizeinrichtung mindestens eine elektrisch bestrombare Heizpatrone mit einer Heizpatronenvorzugslängsachse parallel zu der Querrichtung und wenigstens zwei Heizkeile mit einem stumpfen Ende und einem spitzen Ende aufweist, wobei die Heizkeile beabstandet entlang der Heizpatronenvorzugslängsachse an der Heizpatrone angeordnet sind. Allerdings werden keinerlei spezifische Angaben zu Eigenschaften und Zusammensetzung der Abdichtungsbahn gemacht. Auch wird offengelassen, welche Heizleistung benötigt wird, um die Abdichtungsbahnen innerhalb nützlicher Frist vollflächig zu verschweissen. So haben eigene Versuche gezeigt, dass mit einer solchen elektrischen Heizkeilheizeinrichtung herkömmliche Bitumen-Oberbahnen nicht innerhalb nützlicher Frist und in genügender Festigkeit mit einem bituminösen Untergrund flächenverschweisst, d.h. vollflächig und ohne Blasen, werden können.

Daher ist es die Aufgabe der vorliegenden Erfindung, eine neuartige Bitumen-Oberbahn bereitzustellen, welche flammenlos mit einem bituminösen Untergrund vollflächig und ohne Blasen auf einfache Art und Weise und innerhalb nützlicher Frist verschweisst werden können. Dabei soll der Verlegeaufwand im Vergleich zur herkömmlichen Verlegung mit Flamme vergleichbar sein.

Diese herausfordernde Aufgabe konnte überraschenderweise gelöst werden mit einer Bitumen-Oberbahn (1) zum flammenlosen Flächenverschweissen auf einen bituminösen Untergrund (2) gemäss Anspruch 1.

Beansprucht wird auch die flammenlos verschweisste, mindestens 2-lagige Bitumenbeschichtung (5) umfassend die erfindungsgemässe Bitumen-Oberbahn (1) gemäss Anspruch 7.

Zudem wird auch ein Verfahren zum flammenlosen Flächenverschweissen der erfindungsgemässen Bitumen-Oberbahn (1) gemäss Anspruch 8 beansprucht.

Beansprucht wird zudem auch die Verwendung der erfindungsgemässen Bitumen-Oberbahn (1) zum flammenlosen Flächenverschweissen auf den bituminösen Untergrund (2) mittels flammenloser Wärmequelle gemäss Anspruch 12.

Die erfindungsgemässe Bitumen-Oberbahn (1), die flammenlos verschweisste 2-lagige Bitumenbeschichtung (5), das erfindungsgemässe Verfahren, sowie die erfindungsgemässe Verwendung weisen überraschenderweise eine Vielzahl an Vorteilen auf. So können die Nachteile des Standes der Technik vermieden werden und es besteht keine Gefahr mehr, dass Dämmstoffe oder weitere anliegende brennbare Baustoffe durch Flammen angesengt werden oder sogar Feuer fangen.

Die erfindungsgemässe Bitumen-Oberbahn (1) weist eine optimale Balance auf zwischen exzellenter thermischer Verschweissbarkeit und mechanischer Beständigkeit. So ermöglicht die Bitumen-Oberbahn (1) das Verschweissen bei niedrigeren Temperaturen als beim Verschweissen mittels Flamme. Dies erlaubt das Verschweissen mittels flammenloser Wärmequelle. Trotzdem sind die mechanisch-physikalischen Eigenschaften der Bitumen-Oberbahn (1), beispielsweise in Bezug auf mechanische Stabilität und Belastbarkeit, Abrasion, Reissfestigkeit, Kaltbiegeverhalten, Wärmestandfestigkeit, Dehnverhalten sowie Adhäsion zu bituminösem Untergrund vergleichbar mit herkömmlichen Bitumen-Oberbahnen (1), welche mittels Flamme verschweisst werden. Zudem erfüllt die Bitumen-Oberbahn (1) die von der Schweizer Norm für Bitumen-Oberbahnen (BTSV) in Anlehnung an EN 17643, jedoch bei 1 kPa gemessen, die geforderte Wärmestandfestigkeit von mindestens 100 °C. Auch kann der Fachmann die Bitumen-Oberbahn (1) aufgrund deren Zusammensetzung ohne Blasenbildung verlegen.

Die erfindungsgemässe Bitumen-Oberbahn (1) kann auch auf einfache Art und Weise hergestellt werden. Sie ist gut transportierbar und lagerfähig. Auch zeigt sie eine hohe mechanische Stabilität. Auch kann sie auf die herkömmlichen bituminösen Untergründe (2), beispielsweise auf alle gängigen Bitumen-Unterbahnen (2a) verlegt und mit diesen vollflächig verschweisst werden. Somit weist die erfindungsgemässe Bitumen-Oberbahn (1) in Bezug auf deren Verschweissbarkeit zu Untergründen keinerlei Einschränkungen gegenüber herkömmlichen, flammenverschweissbaren Bitumen-Oberbahnen auf.

Die erfindungsgemässe flammenlos verschweisste, mindestens 2-lagige Bitumenbeschichtung (5) umfassend die Bitumen-Oberbahn (1) und eine mit der Bitumen-Oberbahn (1) verschweisste Bitumen-Unterbahn (2a) weist hervorragende physikalisch Eigenschaften auf, die vergleichbar sind mit Bitumenbeschichtungen, die mittels Flamme verschweisst sind. Trotz des flammenlosen Verschweissens und der damit zusammenhängenden niedrigeren Temperatur verschmelzen die Bitumen-Oberbahn (1) und die Bitumen-Unterbahn (2a) durch das flammenlose Flächenverschweissen miteinander, sodass bei sachgemässem Verschweissen der Bitumenbeschichtung (5) keine oder nur eine kleine Schweissraupe ersichtlich ist. Dabei weist die verschweisste, mindestens 2-lagige Bitumenbeschichtung (5) eine gleichmässige Schichtdicke auf, die in dieser Form nur schwerlich mittels Flammen-Verlegung erzielt werden kann. Denn die Erhitzung mittels Flamme führt schneller zum Schmelzen von Teilbereichen, wodurch die Schichtdicke in diesen Regionen verringert wird.

Das Verfahren zum flammenlosen Flächenverschweissen der Bitumen-Oberbahn (1) auf den bituminösen Untergrund (2) ) - typischerweise auf eine Schicht von zuvor verlegten Bitumen-Unterbahnen (2a) - ist einfach durchzuführen und der Anwender - typischerweise ein Bitumen-Verlege-Profi - benötigt keine aufwändige Schulung. Dabei werden die Bitumenbahnen vollflächig verschweisst, ohne dass unerwünschte Blasen entstehen. Die Verlegegeschwindigkeit der Bitumen-Oberbahn (1) ist vergleichbar mit dem Verschweissen mittels Flamme.

Da mittels der flammenlosen Wärmequelle die untere Bitumenschicht (1a) der Bitumen-Oberbahn (1) wesentlich kontrollierter erwärmt wird als mittels Flamme, ermöglicht das erfindungsgemässe Verfahren das Verschweissen von dünneren Bitumen-Oberbahnen (1), ohne Gefahr zu laufen, dass die Bitumen-Oberbahn (1) aufgrund von unkontrolliertem Erwärmen stellenweise durchschmilzt. Dünnere Bitumen-Oberbahnen (1) sind wiederum aufgrund der geringeren Materialmenge nachhaltiger und leichter im Gewicht.

### Die Bitumen-Oberbahn (1)

Die erfindungsgemässe Bitumen-Oberbahn (1) ist besonders geeignet zum flammenlosen Flächenverschweissen auf einen bituminösen Untergrund (2) mittels flammenloser Wärmequelle. Die Bitumen-Oberbahn (1) umfasst eine untere (1a) und eine obere (1b) Bitumenschicht, wobei zwischen der unteren (1a) und oberen (1b) Bitumenschicht mindestens ein Vlies (3) angeordnet ist. Die Bitumen-Oberbahn (1) liegt typischerweise in Form einer Rolle vor, was die Verlegung durch Abrollen der Rolle besonders einfach macht.

Dabei wird unter Verschweissen verstanden, dass thermisch - und ohne weitere Stoffe wie beispielsweise ein Klebstoff - eine starke Verbindung zwischen der Bitumen-Oberbahn (1) und dem bituminösen Untergrund (2) hergestellt wird. Dabei vermischen sich Komponenten, beispielsweise Molekülketten, der unteren Bitumenschicht (1a) der Bitumen-Oberbahn (1) mit solchen des bituminösen Untergrunds (2). Bei einer vollflächigen Verschweissung ist die ursprüngliche Grenzfläche zwischen der Bitumen-Oberbahn (1) und dem Untergrund (2) nicht mehr sichtbar.

Erfindungsgemäss umfasst die untere Bitumenschicht (1a) der Bitumen-Oberbahn (1)
i) 40 bis 70 Gew.-%, bevorzugt 45-69 Gew.-%, insbesondere 50 bis 68 Gew.-%, ganz besonders bevorzugt 55-68 Gew.%, und insbesondere 60-67 Gew.% Bitumen,
ii) 2 bis 15 Gew.-%, bevorzugt 3 bis 12 Gew.-%, insbesondere 4 bis 10 Gew.-%, ganz besonders bevorzugt 4-8 Gew.%, und insbesondere 5-8 Gew.%, mindestens ein von Bitumen unterschiedliches organisches Polymer,
iii) 10 bis 37 Gew.-%, bevorzugt 12 bis 34 Gew.-%, insbesondere15 bis 30 Gew.-%, ganz besonders bevorzugt 18-28 Gew.%, und insbesondere 20-27 Gew.%, mindestens ein Füllstoff,
iv) 2 bis 10 Gew.-%, bevorzugt 3 bis 9 Gew.-%, insbesondere 3 bis 8 Gew.-%, ganz besonders bevorzugt 4-8 Gew.%, und insbesondere 4-7 Gew.%, mindestens ein Harz, und
v) 0 bis 15 Gew.-% bevorzugt 0 bis 10 Gew.-%, insbesondere 0 bis 8 Gew.-%, ganz besonders bevorzugt 0-6 Gew.%, und insbesondere 0-4 Gew.%, mindestens eine weitere Komponente,
wobei die Summe der Komponenten i) bis v) 100 Gew.-% ergibt, wobei die Zusammensetzung der oberen (1b) und unteren (1a) Bitumenschicht gleich oder verschieden ist. Weist die obere Bitumenschicht (1b) eine andere Zusammensetzung auf, entspricht diese typischerweise einer herkömmlichen Zusammensetzung einer Bitumenbahn, welche mittels Flamme verschweisst wird. Solche Zusammensetzungen sind dem Fachmann bekannt.

Das Bitumen i) bildet die Hauptkomponente der unteren Bitumenschicht (1a) und hat einen wesentlichen Anteil an deren thermoplastischen Eigenschaften wie Erweichungsbereich und Schmelzfähigkeit beim flammenlosen Erwärmen der unteren Bitumenschicht (1a).

Die Zugabe des mindestens einen von Bitumen unterschiedlichen organischen Polymers ii) ist die essenzielle Komponente für die Herstellung von Polymerbitumen. Ist das Polymer ii) beispielsweise Styrol-Butadien-Styrol (SBS), wird Elastomerbitumen erhalten mit einem elastischem Verhalten, welches auch bei tiefen Temperaturen flexibel ist und eine hohe Alterungsbeständigkeit aufweist. Ist das Polymer ii) beispielsweise ein ataktisches Polypropylen (aPP), wird Plastomerbitumen erhalten mit ausgeprägtem thermoplastischem Verhalten, d.h. Geschmeidigkeit.

Der mindestens eine Füllstoff iii) ist inert und verändert sich durch Wärmeeinwirkung nicht. Er wirkt in der Bitumen-Oberbahn (1) armierend und/oder gerüstbildend, wodurch u.a. die verschiedenen physikalischen Eigenschaften der unteren Bitumenschicht (1a) verbessert wird.

Das mindestens eine Harz iv) führt bei der Verarbeitungstemperatur zu einer erhöhten Klebrigkeit - und somit Adhäsion - zum Untergrund, welche auch nach dem Abkühlen anhält. Das Harz iv) mit dem spezifischen Gehaltsanteil ist eine wesentliche Komponente, um das flammenlose Flächenschweissen zu ermöglichen.

Mit der optionalen, mindestens einen weiteren Komponente v) können die Eigenschaften der Bitumen-Oberbahn (1) weiter optimiert werden.

Die Zusammensetzung einer herkömmlichen Bitumenbahn - welche auch derjenigen der oberen Bitumenschicht (1b) entsprechen kann - sind dem Fachmann bekannt. Typischerweise basieren sie auf etwa 30 bis 65 Gew.-% Bitumen und etwa 35 bis 50 Gew.-% mineralischen Füllstoffen. Zudem können sie beispielsweise 20 bis 30 Gew.-% Kunststoff, wie zum Beispiel Styrol-Butadien-Styrol und/oder ataktisches Polypropylen, umfassen, wobei sich die Gewichtsangaben auf das Gesamtgewicht der Bitumenschicht (1b) bezieht. Zusätzlich kann die Bitumenschicht (1b) auch weitere Zusatzstoffe enthalten, beispielsweise ein Wurzelschutz-Additiv. Harze sind jedoch nicht enthalten.

Die erfindungsgemässe Bitumen-Oberbahn (1) wird typischerweise auf bekannte Art und Weise hergestellt. Dabei werden die Komponenten i) bis v) zunächst bei erhöhter Temperatur geschmolzen und miteinander vermischt. Das Vlies (3), d.h. das Trägermaterial, wird mit Bitumen i), der Polymerbitumenmischung der Komponenten i) bis v), oder Teile davon, imprägniert und anschliessend durch eine Pfanne, enthaltend die flüssige Polymerbitumenmischung mit den Komponenten i) bis v), gezogen. Dabei nimmt das imprägnierte Vlies die Polymerbitumenmischung auf. Anschliessend wird das Vlies - mittlerweile in Form einer Bitumenbahn - durch Walzenpaare geführt, um eine korrekte Dickenverteilung sicherzustellen. Dabei läuft die überschüssige Polymerbitumenmischung zurück in die Pfanne. Anschliessen werden die Oberflächen der Bitumen-Oberbahn (1) gegebenenfalls mit der Schutzfolie (4) und/oder mit Mineralpartikel beschichtet. Anschliessend erfolgt die Abkühlung, Ablängung, Aufwickeln sowie Palettieren der Bitumen-Oberbahn (1).

In einer bevorzugten Ausführungsform der Bitumen-Oberbahn (1)
- Weist das Bitumen i) eine Penetration nach EN 1426 zwischen 70 und 220 $\frac{1}{10}$ mm auf,
- Umfasst das mindestens eine Polymer ii) ein synthetisches Polymer, insbesondere ein Styrol-Butadien-Styrol (SBS) Blockpolymer, ein Ethylen-Propylen-Dien-Kautschuk (EPDM-Polymer), und/oder ein Ethylen-Copolymer, beispielsweise ein Ethylen-(Meth)Acrylat-Copolymer,
- Ist der mindestens eine Füllstoff iii) ein organischer oder anorganischer Füllstoff mit einer Korngrösse von max. 1 mm, bevorzugt max. 0.5 mm, insbesondere max. 0.25 mm, gemessen mittels Siebanalyse nach DIN EN 933-10,
- Weist das mindestens eine Harz iv) einen Erweichungspunkt, bestimmt mittels Ring und Kugel-Methode gemäss ASTM E28, von zwischen 80°C und 140°C, bevorzugt zwischen 90°C und 130°C, auf, und/oder umfasst ein natürliches oder synthetisches Harz, ein Terpen, Terpenderivat, ein Kohlenwasserstoff-Harz, bevorzugt ein C5- bis C12-Kohlenwasserstoff-Harz, insbesondere ein C5-, C9- und/der C5/C9-Kohlenwasserstoff-Harz, und/oder Mischungen davon, ein Weichmacher, eine klebrigmachende Komponente, und/oder
- Umfasst die mindestens eine optionale weitere Komponente v) ein Wurzelschutzadditiv, Flammschutzmittel, und/oder Antioxidans.
Geeignete Komponenten i) bis v) sind dem Fachmann bekannt und er kann die optimale Auswahl treffen.

Dabei umfasst der mindestens eine Füllstoff iii) bevorzugt ein anorganischer Füllstoff, insbesondere Calciumcarbonat, Magnesiumcarbonat, Kalk, Talkum, Siliciumdioxid, Zeolith, Asche, Recycling-Glas-Granulat, Glasmehl; und/oder ein organischer Füllstoff, insbesondere Pflanzenkohle, Recyclingmaterial, beispielsweise aus Kunststoffen oder Gummi, oder Mischungen davon.

Bei der Bitumen-Oberbahn (1) ist bevorzugt
- die untere Bitumenschicht (1a) mit einer nicht-haftenden Polymer-Schutzfolie (4), beispielsweise einer herkömmlichen Flammfolie zum Abflammen, zumindest teilweise bedeckt, wobei die Schutzfolie (4) bevorzugt
   i) auf einem aliphatischen Polymer oder einem Polymer mit olefinischen und/oder aromatischen Gruppen basiert, beispielsweise auf Polyethylen (PE), Polypropylen (PP), einem PE/PP-Mischpolymerisat, Polyolefin (PO), insbesondere thermoplastisches Polyolefin (TPO), Polyvinylchlorid (PVC), Polyamid (PA), Polyethylenterephthalat (PET) und/oder Polyacrylnitril (PAN); und/oder
   ii) eine Schichtdicke von 2 bis 25 µm, bevorzugt von 3 bis 15 µm, insbesondere von 3 bis 10 µm, gemessen nach ISO 4591, aufweist,
   wobei die untere Bitumenschicht (1) zusätzlich mittels Mineralpartikel, beispielsweise Talkum, Tonerde, Sand und/oder Schieferplättchen, beschichtet sein kann; und/oder
- die obere Bitumenschicht (1b) mit Mineralpartikeln beschichtet, insbesondere mit Talkum, Tonerde, Sand und/oder Schieferplättchen, wobei 95 Gew.-% der Mineralpartikel eine Korngrösse von höchstens 4 mm, gemessen mittels Siebanalyse nach DIN 66165, aufweist.

Die Schutzfolie (4) schützt die untere Seite der unteren Bitumenschicht (1a) vor Schmutz und/oder unerwünschtem Zusammenkleben, beispielsweise wenn die Bitumen-Oberbahn (1) in Form einer Rolle vorliegt. Denn aufgrund der Zusammensetzung der unteren Bitumenschicht (1a) kann diese, insbesondere bei höheren Temperaturen, beispielsweise bei Sonneneinstrahlung oder bei verschlossenen Transportvorrichtungen, zu einer gewissen Klebrigkeit neigen.

Die Schutzfolie (4) wird typischerweise beim Verschweissen miterhitzt und verschmilzt dadurch mit der unteren Bitumenschicht (1a).

Die Beschichtung der oberen (1b) und/oder unteren (1a) Bitumenschichten mit Mineralpartikel führt zu einem erhöhten UV-, Wetter- und/oder Begehbarkeitsschutz der Bitumen-Oberbahn (1).

Das mindestens eine Vlies (3) der Bitumen-Oberbahn (1) verbindet die untere (1a) mit der oberen (1b) Bitumenschicht und erhöht die mechanische Widerstandsfähigkeit der Bitumen-Oberbahn (1), insbesondere deren Reiss- und Dehnfestigkeit. Das Vlies (3) ist bevorzugt aus synthetischen Kunststofffasern hergestellt, beispielsweise aus Polyesterfasern, Polyethylenterephthalatfasern, Polybutylenterephthalatfasern, Polypropylenfasern, Polyethylenfasern, Polylactidfasern, und/oder Aramidfasern; ein Glasvlies, Glasgewebe, Edelstahlfaservlies, Flachsfaservlies, Basaltfaservlies, und/oder ein Jutegewebe darstellt. Dabei weist das Vlies (3) ein Flächengewicht von beispielsweise 150 bis 300 g/m² auf.

Bevorzugt beträgt die Schichtdicke
- der Bitumen-Oberbahn (1) zwischen 2 und 8 mm, insbesondere zwischen 2 und 6 mm, und/oder
- der unteren (1a) und/oder der oberen (1b) Bitumenschicht bevorzugt zwischen 0.5 und 4 mm, insbesondere zwischen 1 und 3 mm,
gemessen mittels Messtaster nach EN 1849-1. Diese Schichtdicken erlauben eine genügende Abdeckung mit der notwendigen Widerstandsfähigkeit.

Die Schichtdicken der unteren (1a) und obere (1b) Bitumenschicht können gleich sein, d.h. deren Verhältnis beträgt 1:1. Es ist jedoch auch möglich, dass die untere (1a) Bitumenschicht eine grössere Schichtdicke aufweist, sodass das Schichtdickenverhältnis der unteren (1a) zur oberen (1b) beispielsweise 2:1 beträgt. Zwischen der unteren (1a) und der oberen (1b) Bitumenschicht ist typischerweise das Vlies angeordnet, wodurch die beiden Bitumenschichten gut voneinander unterschieden werden können.

### Die flammenlos verschweisste 2-lagige Bitumenbeschichtung (5)

Die erfindungsgemässe, flammenlos verschweisste, mindestens 2-lagige Bitumenbeschichtung (5) umfasst die erfindungsgemässe Bitumen-Oberbahn (1) und eine mit der Bitumen-Oberbahn (1) verschweisste Bitumen-Unterbahn (2a). Dabei kann als Bitumen-Unterbahn (2a) eine herkömmliche Bitumen-Unterbahn (2a) eingesetzt werden, was sich nicht nachteilig auf deren Verschweissung aufweist.

Die flammenlos verschweisste, mindestens 2-lagige Bitumenbeschichtung (5) weist - im Vergleich zu mittels Flamme verschweissten Bitumenbschichtungen - eine gleichmässigere Schichtdicke auf, da mittels flammenloser Wärmequelle Teilbereiche der Bitumenbahnen, insbesondere der unteren Bitumenschicht (1a) der Bitumen-Oberbahn (1), weniger schnell und weniger stark wegschmelzen, was zu unterschiedlichen Schichtdicken führt.

Die Bitumenbeschichtung (5) ist typischerweise 2-lagig, wobei sich entlang der Randbereiche die verlegten Bitumen-Oberbahnen (1) in der Regel überlappen, wodurch eine 3-lagige Bitumenbeschichtung (5) entsteht.

### Das Verfahren zum flammenlosen Flächenverschweissen

Beim erfindungsgemässe Verfahren zum flammenlosen Flächenverschweissen der erfindungsgemässen Bitumen-Oberbahn (1) auf den bituminösen Untergrund (2), wird die untere Bitumenschicht (1a) der Bitumen-Oberbahn (1) mit der flammenlosen Wärmequelle bis mindestens zum Erweichungsbereich, d.h. Schmelzbereich, der unteren Bitumenschicht (1a) erwärmt und auf den bituminösen Untergrund (2) verlegt.

Nach dem Schmelzen der unteren Bitumenschicht (1a) wird die Bitumen-Oberbahn (1) auf den bituminösen Untergrund (2) auf herkömmliche Art und Weise verlegt und verpresst, typischerweise mittels Andrückwalze oder handgeführter Andrückrolle.

Somit kann die erfindungsgemässe Bitumen-Oberbahn (1) auf vergleichbare Art und Weise wie mit herkömmlichen Bitumen-Oberbahnen mit dem bituminösen Untergrund (2) verschweisst werden, wobei mit dem erfindungsgemässen Verfahren als Wärmequelle eine flammenlose Wärmequelle verwendet wird anstelle einer herkömmlichen Flamme.

Die bekannten flammenlosen Wärmequellen sind nicht in der Lage, die untere Bitumenschicht (2a) der Bitumen-Oberbahn (1) und die obere Bitumenschicht der Bitumen-Unterbahn über die gesamte Breite genügend schnell zu erwärmen, damit sie miteinander effizient verschweisst werden können. Zudem erwärmen diese Wärmequellen üblicherweise nur einen relativ kleinen Teil der Bitumenbahnen, d.h. lediglich den Überlappungsbereich, wodurch sie für den flächigen Einsatz ungeeignet sind.

Im Gegensatz dazu liegt der Schmelzbereich der unteren Bitumenschicht (1a) niedriger, sodass diese zu Schmelzen beginnt und beim Verlegen der Bitumen-Oberbahn (1) auf den bituminösen Untergrund (2) an den Seiten der Bitumen-Oberbahn (1) geschmolzenes Bitumen-Komposit entweicht. Daran erkennt der Fachmann, dass der Schmelzbereich erreicht oder übertroffen ist, wodurch das gewünschte Flächenverschweissen erhalten wird. Dabei liegt der Schmelzbereich der unteren Bitumenschicht (1a) typischerweise zwischen 120°C und 180°C, insbesondere zwischen 140°C und 160°C.

Bevorzugte, nicht-limitierende bituminöse Untergründe (2) umfassen eine - typischerweise herkömmliche - Bitumen-Unterbahn (2a) oder ein - in der Regel kommerziell erhältlicher und vollflächig auf den Untergrund applizierter - bitumenhaltiger Primer (2b). Ein solcher wird beispielsweise auf eine Betonfläche, wie eine Tiefgaragendecke, aufgetragen. Bitumen-Unterbahnen (2a) werden hingegen in der Regel im Hochbau eingesetzt, um Gebäude dauerhaft vor Feuchtigkeit zu schützen und somit eine fachgerechte Abdichtung zu erhalten.

Geeignete, nicht-limitierende flammenlose Wärmequellen umfassen eine elektrische Wärmequelle, insbesondere elektrische Schweissautomaten wie eine elektrische Heizkeilvorrichtung oder Heizschwertvorrichtung, eine elektrische Heissluftvorrichtung, oder ein gasbetriebenes Flächenschweissgerät mit Metallgehäuse, beispielsweise in Form eines Heizkeils oder Heizschwertes, und eingehauster Flamme. Dabei ist die flammenlose Wärmequelle bevorzugt fahrbar oder von Hand führbar ist. Geeignete flammenlose Wärmequellen sind dem Fachmann bekannt und kommerziell erhältlich. Ein nicht-limitierendes Beispiel einer geeigneten mobilen flammenlosen Wärmequelle in Form einer Schweissvorrichtung ist beispielsweise in der WO-A-2023/006518 beschrieben. Ist die flammenlose Wärmequelle ein gasbetriebenes Flächenschweissgerät mit Metallgehäuse mit eingehauster Flamme, d.h. ohne offene Flamme, erhitzt diese das Metallgehäuse und hat keinen Kontakt mit der Umwelt, beispielsweise mit Bitumenbahnen. Dabei ist die Flamme fast vollständig ummantelt und weist lediglich einige Öffnungen für die Luftzirkulation auf. Geeignete Geräte mit Metallgehäusen mit eingehauster Flamme sind dem Fachmann bekannt und kommerziell erhältlich.

Diese Wärmequellen können mittels Baustrom, d.h. Kraftstrom, oder Haushaltstrom, betrieben werden, welche auf Baustellen problemlos verfügbar sind. Sie generieren zudem eine genügend starke Heizleistung, um die untere Bitumenschicht (1a) der erfindungsgemässen Bitumen-Oberbahn (1) bis zum Erweichungspunkt - oder darüber - zu erwärmen, um die gewünschte Flächenverschweissung zu erhalten. So kann die flammenlose Wärmequelle mit einer Geschwindigkeit von beispielsweise 1-2 Meter pro Minute fortbewegt werden. Dabei bleiben Arbeitsaufwand und -zeit vergleichbar dem Verschweissen mittels offener Flamme. Ist die flammenlose Wärmequelle ein Metallgehäuse mit eingehauster Flamme, ist die Wärmequelle typischerweise Gas, welches in Gasflaschen auf dem Gerät mitgeführt wird.

Im erfindungsgemässen Verfahren
- entspricht die Breite der fahrbaren Heizkeil-, Heizschwert-, oder Heissluftvorrichtung, welche in der Fläche eingesetzt werden, bevorzugt mindestens der Breite der Bitumen-Oberbahn (1), wobei die Fahrrichtung der flammenlose Wärmequellen - insbesondere von Schweissautomaten - in Längsrichtung der Bitumen-Oberbahn (1) verläuft. Dies erlaubt die ganze Breite der Bitumen-Oberbahn (1) gleichzeitig zu verschweissen, wodurch das Flächenverschweissen, d.h. das Verschweissen der ganzen Bitumenfläche, auf einfache Art und Weise ermöglicht wird; und/oder
- beträgt die Breite der von Hand geführten Heizkeil-, Heizschwert-, oder Heissluftvorrichtung bevorzugt zwischen 2 und 10 cm. Solche handgeführten Vorrichtungen werden insbesondere zum Verschweissen von Randbereichen, d.h. für den Überlappungsbereich, verwendet.

### Die Verwendung

Die erfindungsgemässe Bitumen-Oberbahn (1) wird insbesondere zum flammenlosen Flächenverschweissen auf den bituminösen Untergrund (2) mittels flammenloser Wärmequelle verwendet.

Bei der erfindungsgemässen Verwendung stellt die flammenlose Wärmequelle bevorzugt eine - typischerweise kommerziell erhältliche - elektrische Heizkeilvorrichtung oder Heizschwertvorrichtung, eine elektrische Heissluftvorrichtung, oder ein gasbetriebenes Flächenschweissgerät mit Metallgehäuse mit eingehauster Flamme dar.

Der bituminöse Untergrund (2) stellt dabei bevorzugt eine Bitumen-Unterbahn (2a) dar, wobei die Bitumen-Unterbahn (2a) bevorzugt auf einer Wärmedämmung in Form von organischem Polymerschaum, wie beispielsweise Expandiertes (EPS) oder Extrudiertes (XPS) Polystyrol, Polyurethanschaum (PUR) oder Polyisocyanuratschaum (PIR), verlegt ist.

Es werden folgende Bezugszeichen verwendet:
(1) Bitumen-Oberbahn (1)
   (1a) untere Bitumenschicht (1a) der Bitumen-Oberbahn (1)
   (1b) obere Bitumenschicht (1b) der Bitumen-Oberbahn (1)
(2) bituminösen Untergrund (2)
   (2a) Bitumen-Unterbahn (2a)
   (2b) bitumenhaltiger Primer (2b)
(3) Vlies (3)
(4) nicht-haftende Polymer-Schutzfolie (4)
(5) Flammenlos verschweisste, mindestens 2-lagige Bitumenbeschichtung (5)

Im Folgenden wird eine nicht-limitierende, bevorzugte Ausführungsform der erfindungsgemässen Bitumen-Oberbahn (1) anhand der nachfolgenden Zeichnung beschrieben, die nicht einschränkend auszulegen sind und als Bestandteil der Beschreibung verstanden wird:

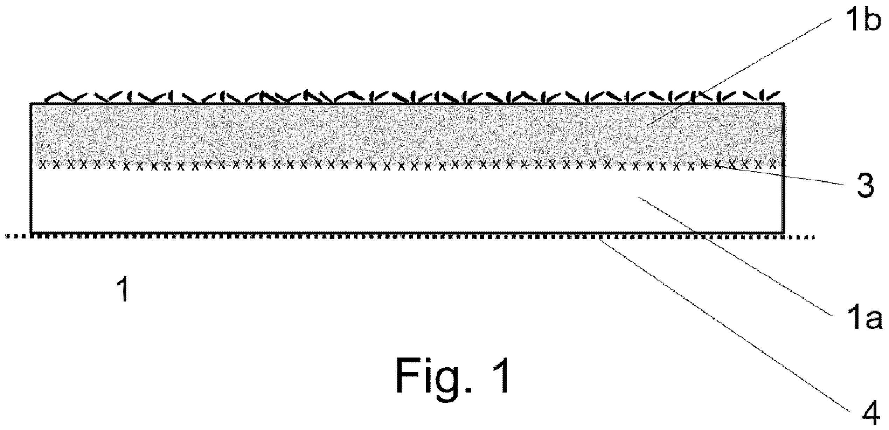

- Fig. 1: zeigt die Bitumen-Oberbahn (1) mit der unteren (1a) und oberen (1b) Bitumenschicht. Dazwischen ist das mindestens eine Vlies (3) angeordnet.
Die untere (1a) Bitumenschicht ist mit einer nicht-haftenden Polymer-Schutzfolie (4), d.h. einer Flammfolie, bedeckt. Die Oberseite der oberen Bitumenschicht (1b) ist mit Mineralpartikeln beschichtet, beispielsweise mit Talkum, Tonerde, Sand und/oder Schieferplättchen, um einen erhöhten UV-, Wetter- und/oder Begehbarkeitsschutz zu erhalten.

## Patentansprüche

1. Bitumen-Oberbahn (1) zum flammenlosen Flächenverschweissen auf einen bituminösen Untergrund (2) mittels flammenloser Wärmequelle, wobei die Bitumen-Oberbahn (1) eine untere (1a) und eine obere (1b) Bitumenschicht umfasst, wobei zwischen der unteren (1a) und oberen (1b) Bitumenschicht mindestens ein Vlies (3) angeordnet ist, **dadurch gekennzeichnet, dass** die untere Bitumenschicht (1a) der Bitumen-Oberbahn (1)
i) 40 bis 70 Gew.-%, bevorzugt 45-69 Gew.-%, insbesondere 50 bis 68 Gew.-%, Bitumen,
ii) 2 bis 15 Gew.-%, bevorzugt 3 bis 12 Gew.-%, insbesondere 4 bis 10 Gew.-%, mindestens ein von Bitumen unterschiedliches organisches Polymer,
iii) 10 bis 37 Gew.-%, bevorzugt 12 bis 34 Gew.-%, insbesondere 15 bis 30 Gew.-%, mindestens ein Füllstoff,
iv) 2 bis 10 Gew.-%, bevorzugt 3 bis 9 Gew.-%, insbesondere 3 bis 8 Gew.-%, mindestens ein Harz, und
v) 0 bis 15 Gew.-% bevorzugt 0 bis 10 Gew.-%, insbesondere 0 bis 8 Gew.-%, mindestens eine weitere Komponente
umfasst, wobei die Summe der Komponenten i) bis v) 100 Gew.-% ergibt, und
- die Zusammensetzung der oberen (1b) und unteren (1a) Bitumenschicht gleich oder verschieden ist.

2. Bitumen-Oberbahn (1) nach Anspruch 1, **dadurch gekennzeichnet, dass**
- das Bitumen i) eine Penetration nach EN 1426 zwischen 70 und 220 $\frac{1}{10}$ mm aufweist,
- das mindestens eine Polymer ii) ein synthetisches Polymer, insbesondere ein Styrol-Butadien-Styrol (SBS) Blockpolymer, ein Ethylen-Propylen-Dien-Kautschuk (EPDM-Polymer), und/ oder ein Ethylen-Copolymer, beispielsweise ein Ethylen-(Meth)Acrylat-Copolymer umfasst,
- der mindestens eine Füllstoff iii) ein organischer oder anorganischer Füllstoff ist mit einer Korngrösse von max. 1 mm, bevorzugt max. 0.5 mm, insbesondere max. 0.25 mm, gemessen mittels Siebanalyse nach DIN EN 933-10,
- das mindestens eine Harz iv) einen Erweichungspunkt, bestimmt mittels Ring und Kugel-Methode gemäss ASTM E28, von zwischen 80°C und 140°C, bevorzugt zwischen 90°C und 130°C, aufweist, und/oder ein natürliches oder synthetisches Harz, ein Terpen, Terpenderivat, ein Kohlenwasserstoff-Harz, bevorzugt ein C5- bis C12-Kohlenwasserstoff-Harz, insbesondere ein C5-, C9- und/der C5/C9-Kohlenwasserstoff-Harz umfasst, und/oder Mischungen davon, ein Weichmacher, eine klebrigmachende Komponente, und/oder
- die mindestens eine optionale weitere Komponente v) ein Wurzelschutzadditiv, Flammschutzmittel, und/oder Antioxidans umfasst.

3. Bitumen-Oberbahn (1) nach Anspruch 1 oder 2, **dadurch gekennzeichnet, dass**
- die untere Bitumenschicht (1a) der Bitumen-Oberbahn (1) mit einer nicht-haftenden Polymer-Schutzfolie (4) zumindest teilweise bedeckt ist, wobei die Schutzfolie (4) bevorzugt
i) auf einem aliphatischen Polymer oder einem Polymer mit olefinischen und/oder aromatischen Gruppen basiert, und/oder
ii) eine Schichtdicke von 2 bis 25 µm, bevorzugt von 3 bis 15 µm, insbesondere von 3 bis 10 µm, gemessen nach ISO 4591, aufweist, und/oder
- die obere Bitumenschicht (1b) der Bitumen-Oberbahn (1) mit Mineralpartikeln beschichtet ist, insbesondere mit Talkum, Tonerde, Sand und/oder Schieferplättchen, wobei 95 Gew.-% der Mineralpartikel eine Korngrösse von höchstens 3 mm, gemessen mittels Siebanalyse nach DIN 66165, aufweisen.

4. Bitumen-Oberbahn (1) nach mindestens einem der Ansprüche 1 bis 3, **dadurch gekennzeichnet, dass** das mindestens ein Vlies (3) aus synthetischen Kunststofffasern hergestellt ist, beispielsweise aus Polyesterfasern, Polyethylenterephthalatfasern, Polybutylenterephthalatfasern, Polypropylenfasern, Polyethylenfasern, Polylactidfasern, und/oder Aramidfasern; ein Glasvlies, Glasgewebe, Edelstahlfaservlies, Flachsfaservlies, Basaltfaservlies, und/oder ein Jutegewebe darstellt.

5. Bitumen-Oberbahn (1) nach mindestens einem der Ansprüche 1 bis 4, **dadurch gekennzeichnet, dass** die Schichtdicke
- der Bitumen-Oberbahn (1) zwischen 2 und 8 mm, bevorzugt zwischen 2 und 6 mm, und/oder
- der unteren (1a) und/oder der oberen (1b) Bitumenschicht zwischen 0.5 und 4 mm, bevorzugt zwischen 1 und 3 mm,
gemessen mittels Messtaster nach EN 1849-1, beträgt.

6. Bitumen-Oberbahn (1) nach mindestens einem der Ansprüche 1 bis 5, **dadurch gekennzeichnet, dass** der mindestens eine Füllstoff iii) ein anorganischer Füllstoff, insbesondere Calciumcarbonat, Magnesiumcarbonat, Kalk, Talkum, Siliciumdioxid, Zeolith, Asche, Recycling-Glas-Granulat, Glasmehl, und/oder ein organischer Füllstoff, insbesondere Pflanzenkohle, Recyclingmaterial, beispielsweise aus Kunststoffen oder Gummi, oder Mischungen davon, umfasst.

7. Flammenlos verschweisste, mindestens 2-lagige Bitumenbeschichtung (5) umfassend die Bitumen-Oberbahn (1) nach mindestens einem der Ansprüche 1 bis 6 und eine mit der Bitumen-Oberbahn (1) verschweisste Bitumen-Unterbahn (2a).

8. Verfahren zum flammenlosen Flächenverschweissen der Bitumen-Oberbahn (1) nach mindestens einem der Ansprüche 1 bis 6 auf den bituminösen Untergrund (2), wobei die untere Bitumenschicht (1a) der Bitumen-Oberbahn (1) mit der flammenlosen Wärmequelle bis mindestens zum Erweichungsbereich der unteren Bitumenschicht (1a) erwärmt und auf den bituminösen Untergrund (2) verlegt wird.

9. Verfahren nach Anspruch 8, **dadurch gekennzeichnet, dass** der bituminöse Untergrund (2) eine Bitumen-Unterbahn (2a) oder ein bitumenhaltiger Primer (2b) umfasst.

10. Verfahren nach Anspruch 8 oder 9, **dadurch gekennzeichnet, dass** die flammenlose Wärmequelle eine elektrische Wärmequelle, insbesondere eine elektrische Heizkeilvorrichtung oder Heizschwertvorrichtung, eine elektrische Heissluftvorrichtung, oder ein gasbetriebenes Flächenschweissgerät mit Metallgehäuse und eingehauster Flamme umfasst, wobei die flammenlose Wärmequelle bevorzugt fahrbar oder von Hand führbar ist.

11. Verfahren nach mindestens einem der Ansprüche 8 bis 10, **dadurch gekennzeichnet, dass** die Breite der
- fahrbaren Heizkeil-, Heizschwert-, oder Heissluftvorrichtung mindestens der Breite der Bitumen-Oberbahn (1) entspricht, wobei die Fahrrichtung der Vorrichtung in Längsrichtung der Bitumen-Oberbahn (1) verläuft, und/oder
- von Hand geführten Heizkeil-, Heizschwert-, oder Heissluftvorrichtung zwischen 2 und 10 cm beträgt.

12. Verwendung der Bitumen-Oberbahn (1) nach mindestens einem der Ansprüche 1 bis 6 zum flammenlosen Flächenverschweissen auf den bituminösen Untergrund (2) mittels flammenloser Wärmequelle.

13. Verwendung nach Anspruch 12, **dadurch gekennzeichnet, dass** die flammenlose Wärmequelle eine elektrische Heizkeilvorrichtung oder Heizschwertvorrichtung, eine elektrische Heissluftvorrichtung, oder ein gasbetriebenes Flächenschweissgerät mit Metallgehäuse mit eingehauster Flamme darstellt.

14. Verwendung nach Anspruch 12 oder 13, **dadurch gekennzeichnet, dass** der bituminöse Untergrund (2) eine Bitumen-Unterbahn (2a) darstellt, wobei die Bitumen-Unterbahn (2a) bevorzugt auf einer Wärmedämmung in Form von organischem Polymerschaum verlegt ist.

## Geänderte Patentansprüche

### Geänderte Patentansprüche gemäss Regel 137(2) EPÜ.

1. Verfahren zum flammenlosen Flächenverschweissen einer Bitumen-Oberbahn (1) auf einen bituminösen Untergrund (2) mittels flammenloser Wärmequelle, wobei eine untere Bitumenschicht (1a) der Bitumen-Oberbahn (1) mit der flammenlosen Wärmequelle bis mindestens zum Erweichungsbereich der unteren Bitumenschicht (1a) erwärmt und auf den bituminösen Untergrund (2) verlegt wird, wobei die Bitumen-Oberbahn (1) eine untere (1a) und eine obere (1b) Bitumenschicht umfasst, wobei zwischen der unteren (1a) und oberen (1b) Bitumenschicht mindestens ein Vlies (3) angeordnet ist, **dadurch gekennzeichnet, dass** die untere Bitumenschicht (1a) der Bitumen-Oberbahn (1)
i) 40 bis 70 Gew.-%, bevorzugt 45-69 Gew.-%, insbesondere 50 bis 68 Gew.-%, Bitumen,
ii) 2 bis 15 Gew.-%, bevorzugt 3 bis 12 Gew.-%, insbesondere 4 bis 10 Gew.-%, mindestens ein von Bitumen unterschiedliches organisches Polymer,
iii) 10 bis 37 Gew.-%, bevorzugt 12 bis 34 Gew.-%, insbesondere 15 bis 30 Gew.-%, mindestens ein Füllstoff,
iv) 2 bis 10 Gew.-%, bevorzugt 3 bis 9 Gew.-%, insbesondere 3 bis 8 Gew.-%, mindestens ein Harz, und
v) 0 bis 15 Gew.-% bevorzugt 0 bis 10 Gew.-%, insbesondere 0 bis 8 Gew.-%, mindestens eine weitere Komponente
umfasst, wobei die Summe der Komponenten i) bis v) 100 Gew.-% ergibt, und
- die Zusammensetzung der oberen (1b) und unteren (1a) Bitumenschicht gleich oder verschieden ist.

2. Verfahren nach Anspruch 1, **dadurch gekennzeichnet, dass**
- das Bitumen i) eine Penetration nach **EN** 1426 zwischen 70 und 220 $\frac{1}{1} mm$ aufweist,
- das mindestens eine Polymer ii) ein synthetisches Polymer, insbesondere ein Styrol-Butadien-Styrol (SBS) Blockpolymer, ein Ethylen-Propylen-Dien-Kautschuk (EPDM-Polymer), und/ oder ein Ethylen-Copolymer, beispielsweise ein Ethylen-(Meth)Acrylat-Copolymer umfasst,
- der mindestens eine Füllstoff iii) ein organischer oder anorganischer Füllstoff ist mit einer Korngrösse von max. 1 mm, bevorzugt max. 0.5 mm, insbesondere max. 0.25 mm, gemessen mittels Siebanalyse nach **DIN EN** 933-10,
- das mindestens eine Harz iv) einen Erweichungspunkt, bestimmt mittels Ring und Kugel-Methode gemäss ASTM E28, von zwischen 80°C und 140°C, bevorzugt zwischen 90°C und 130°C, aufweist, und/oder ein natürliches oder synthetisches Harz, ein Terpen, Terpenderivat, ein Kohlenwasserstoff-Harz, bevorzugt ein C5- bis C12-Kohlenwasserstoff-Harz, insbesondere ein C5-, C9- und/der C5/C9-Kohlenwasserstoff-Harz umfasst, und/oder Mischungen davon, ein Weichmacher, eine klebrigmachende Komponente, und/oder
- die mindestens eine optionale weitere Komponente v) ein Wurzelschutzadditiv, Flammschutzmittel, und/oder Antioxidans umfasst.

3. Verfahren nach Anspruch 1 oder 2, **dadurch gekennzeichnet, dass**
- die untere Bitumenschicht (1a) der Bitumen-Oberbahn (1) mit einer nicht-haftenden Polymer-Schutzfolie (4) zumindest teilweise bedeckt ist, wobei die Schutzfolie (4) bevorzugt
i) auf einem aliphatischen Polymer oder einem Polymer mit olefinischen und/oder aromatischen Gruppen basiert, und/oder
ii) eine Schichtdicke von 2 bis 25 µm, bevorzugt von 3 bis 15 µm, insbesondere von 3 bis 10 µm, gemessen nach ISO 4591, aufweist, und/oder
- die obere Bitumenschicht (1b) der Bitumen-Oberbahn (1) mit Mineralpartikeln beschichtet ist, insbesondere mit Talkum, Tonerde, Sand und/oder Schieferplättchen, wobei 95 Gew.-% der Mineralpartikel eine Korngrösse von höchstens 3 mm, gemessen mittels Siebanalyse nach **DIN** 66165, aufweisen.

4. Verfahren nach mindestens einem der Ansprüche 1 bis 3, **dadurch gekennzeichnet, dass** das mindestens ein Vlies (3) aus synthetischen Kunststofffasern hergestellt ist, beispielsweise aus Polyesterfasern, Polyethylenterephthalatfasern, Polybutylenterephthalatfasern, Polypropylenfasern, Polyethylenfasern, Polylactidfasern, und/oder Aramidfasern; ein Glasvlies, Glasgewebe, Edelstahlfaservlies, Flachsfaservlies, Basaltfaservlies, und/oder ein Jutegewebe darstellt.

5. Verfahren nach mindestens einem der Ansprüche 1 bis 4, **dadurch gekennzeichnet, dass** die Schichtdicke
- der Bitumen-Oberbahn (1) zwischen 2 und 8 mm, bevorzugt zwischen 2 und 6 mm, und/oder
- der unteren (1a) und/oder der oberen (1b) Bitumenschicht zwischen 0.5 und 4 mm, bevorzugt zwischen 1 und 3 mm,
gemessen mittels Messtaster nach **EN** 1849-1, beträgt.

6. Verfahren nach mindestens einem der Ansprüche 1 bis 5, **dadurch gekennzeichnet, dass** der mindestens eine Füllstoff iii) ein anorganischer Füllstoff, insbesondere Calciumcarbonat, Magnesiumcarbonat, Kalk, Talkum, Siliciumdioxid, Zeolith, Asche, Recycling-Glas-Granulat, Glasmehl, und/oder ein organischer Füllstoff, insbesondere Pflanzenkohle, Recyclingmaterial, beispielsweise aus Kunststoffen oder Gummi, oder Mischungen davon, umfasst.

7. Verfahren nach einem der vorhergehenden Ansprüche, dadruch gekennzeichnet, dass der bituminöse Untergrund (2) eine mit der Bitumen-Oberbahn (1) verschweisste Bitumen-Unterbahn (2a) umfasst.

8. Verfahren nach mindestens einem der vorhergehenden Ansprüche, **dadurch gekennzeichnet, dass** die untere Bitumenschicht (1a) der Bitumen-Oberbahn (1) mit der flammenlosen Wärmequelle bis mindestens zum Erweichungsbereich der unteren Bitumenschicht (1a) erwärmt und auf den bituminösen Untergrund (2) verlegt wird.

9. Verfahren nach einem der vorhergehenden Ansprüche, **dadurch gekennzeichnet, dass** der bituminöse Untergrund (2) eine Bitumen-Unterbahn (2a) oder ein bitumenhaltiger Primer (2b) umfasst.

10. Verfahren nach einem der vorhergehenden Ansprüche, **dadurch gekennzeichnet, dass** die flammenlose Wärmequelle eine elektrische Wärmequelle, insbesondere eine elektrische Heizkeilvorrichtung oder Heizschwertvorrichtung, eine elektrische Heissluftvorrichtung, oder ein gasbetriebenes Flächenschweissgerät mit Metallgehäuse und eingehauster Flamme umfasst, wobei die flammenlose Wärmequelle bevorzugt fahrbar oder von Hand führbar ist.

11. Verfahren nach Anspruch 10, **dadurch gekennzeichnet, dass** die Breite der
- fahrbaren Heizkeil-, Heizschwert-, oder Heissluftvorrichtung mindestens der Breite der Bitumen-Oberbahn (1) entspricht, wobei die Fahrrichtung der Vorrichtung in Längsrichtung der Bitumen-Oberbahn (1) verläuft, und/oder
- von Hand geführten Heizkeil-, Heizschwert-, oder Heissluftvorrichtung zwischen 2 und 10 cm beträgt.

12. Verfahren nach einem der Ansprüche 9 bis 11, **dadurch gekennzeichnet, dass** die Bitumen-Unterbahn (2a) bevorzugt auf einer Wärmedämmung in Form von organischem Polymerschaum verlegt wird.
